# EUROPÄISCHE PATENTSCHRIFT

(11) **EP 0 597 199 B1**
(45) Veröffentlichungstag und Bekanntmachung des Hinweises auf die Patenterteilung: **09.10.1996**
(21) Anmeldenummer: 93113405.0
(22) Anmeldetag: 23.08.1993
(51) Int. Cl.: F21V 7/18, G03B 15/06

(54) **Transportabler Lichtreflektor**
Transportable light reflector
Réflecteur de lumière transportable

(30) Priorität: 11.11.1992 DE 9215330 U
(43) Veröffentlichungstag der Anmeldung: 18.05.1994
(73) Patentinhaber: Geller, Peter, D-22453 Hamburg (DE)
(72) Erfinder: Geller, Peter, D-22453 Hamburg (DE)
(74) Vertreter: von Raffay, Vincenz, Dipl.-Ing.

(56) Entgegenhaltungen:
- FR-A- 1 167 367
- US-A- 2 129 154
- US-A- 2 888 072
- US-A- 3 213 925
- US-A- 4 110 003

## Beschreibung

Die Erfindung betrifft einen transportablen Lichtreflektor nach dem Oberbegriff des Patentanspruches 1.

Aus der US-A-3,213,925 ist ein derartiger Lichtreflektor bekannt. Die Querbügel werden nach Art eines Bogens durch einen Draht gespannt, so daß in dieser Stellung, die der Gebrauchslage entspricht, ein räumliches Rahmengestell entsteht, über das das Reflektionstuch dann gespannt wird. Die Spannung der Querbügel zu gleichmäßig gekrümmten Bögen erfolgt mit Hilfe gesonderter Spanndrähte, die nach dem Befestigen des Reflektionstuches wieder gelöst werden. Das räumliche Gebilde wird dann durch das Reflektionstuch gehalten. Die Drähte begrenzen die Belastung des Reflektionstuches, so daß dieses nicht über die Elastizitätsgrenze hinaus gestreckt wird. Das Material des Reflektionstuches zieht sich nach dem Auseinandernehmen zusammen, und es kann aufgerollt werden. Diese Konstruktion ist eher für Innenräume geeignet, da sie nicht besonders torsionssteif ist und insbesondere keinen Windbelastungen ausgesetzt werden kann.

Aus der US-A-4,110,003 ist eine ähnliche Konstruktion bekannt, bei der das Reflektionstuch zum Transport aufgerollt werden kann. Das Aufrollen erfolgt mit Hilfe von seitlich angeordneten Längsstreben, die durch ein auf der Rückseite anzuordnendes Spannelement, einen Art Querbügel, auseinandergehalten werden. Dieser Querbügel ist aus flexiblem Material und nach hinten, d.h. von dem Reflektionstuch weg gekrümmt. Er wirkt wie eine Blattfeder und hält so die Spannung aufrecht. Das Reflektionstuch selbst ist nicht aus federelastischem Material. Die Konstruktion ist nicht stabil, so daß sie nicht zum Einsatz im Freien bei Windbelastung eingesetzt werden kann.

Lichtreflektoren, die keine Projektionsschirme sind, dienen der Reflektion von künstlichem Licht oder Tageslicht zur Unterstützung fotografischer Arbeiten, wobei dieses auch im Freien, d.h. bei mehr oder weniger starker Windbeanspruchung erfolgen kann. Die bekannten Lichtreflektoren sind entweder starr oder dadurch aufstellbar, daß Teile des Rahmengestells aus flexiblen Bügeln bestehen, die gespannt oder gebogen werden, um für ein räumliches Rahmengestell lediglich in Gebrauchslage zu sorgen.

Der Erfindung liegt die Aufgabe zugrunde, einen Lichtreflektor der eingangs genannten Art zu schaffen, der nicht nur zum Transport leicht zusammenlegbar ist, sondern auch in Gebrauchslage sehr stabil und steif ist.

Diese Aufgabe wird durch das Kennzeichnen des Anspruchs 1 gelöst.

Erfindungsgemäß ist es also so, daß durch die abgebogenen Enden der Querbügel ein räumliches Rahmengestell besteht, über das dann das Reflektionstuch aus federelastischem Material gespannt wird. Die Spannung des Reflektionstuches bleibt auch wirksam, wenn dieses seine endgültige Lage einnimmt. Das Rahmengestell ist durch die Abbiegung der Querbügel grundsätzlich räumlich, d.h. dreisimensional. Zusammengehalten wird dieses an sich steife räumliche Rahmengestell durch das Reflektionstuch und seine Federelastizität. Hierdurch entsteht ein sehr stabiler Lichtreflektor, der dennoch klein zusammenlegbar und leicht ist.

Bei einer vorteilhaften Ausführungsform sind zwei Längsstreben und drei Querbügel vorhanden, wobei sich die Längsstreben noch einmal teilen lassen. Im aufgestellten Zustand werden auch durch Windangriffe hervorgerufene Torsionskräfte ohne weiteres aufgenommen.

In den Ansprüchen 2 bis 7 sind vorteilhafte Ausgestaltungen unter Schutz gestellt.

Im folgenden wird die Erfindung unter Hinweis auf die Zeichnung anhand eines Ausführungsbeispieles näher erläutert.

Es zeigt:
- Fig. 1: eine Ansicht einer Ausführungsform eines Lichtreflektors nach der Erfindung in Gebrauchslage von hinten, d.h. von der Rückseite der Reflektionsfläche;
- Fig. 2: eine Einzelheit des linken oberen Teils des Rahmengestells im vergrößerten Maßstab;
- Fig. 3: eine der Fig. 2 entsprechende Ansicht, jedoch der rechten oberen Ecke des Rahmengestells;
- Fig. 4: eine Ansicht auf einen Querbügel mit abgebogenen Enden; und
- Fig. 5: eine Ansicht des linken Teils des Querbügels der Fig. 4 im vergrößerten Maßstab.

Der in der Zeichnung dargestellte Lichtreflektor wird durch ein Rahmengestell, im wesentlichen bestehend aus zwei Längsstreben 2 und drei Querbügeln 3 gebildet. Über dieses Rahmengestell wird ein Reflektionstuch 1 gespannt, das aus federelastischem Material besteht, d.h. im aufgespannten Zustand ist die Federspannung wirksam, um das Rahmengestell zusammenzuhalten, d.h. zu verhindern, daß sich die Verbindungen zwischen Längsstreben und Querbügeln lösen.

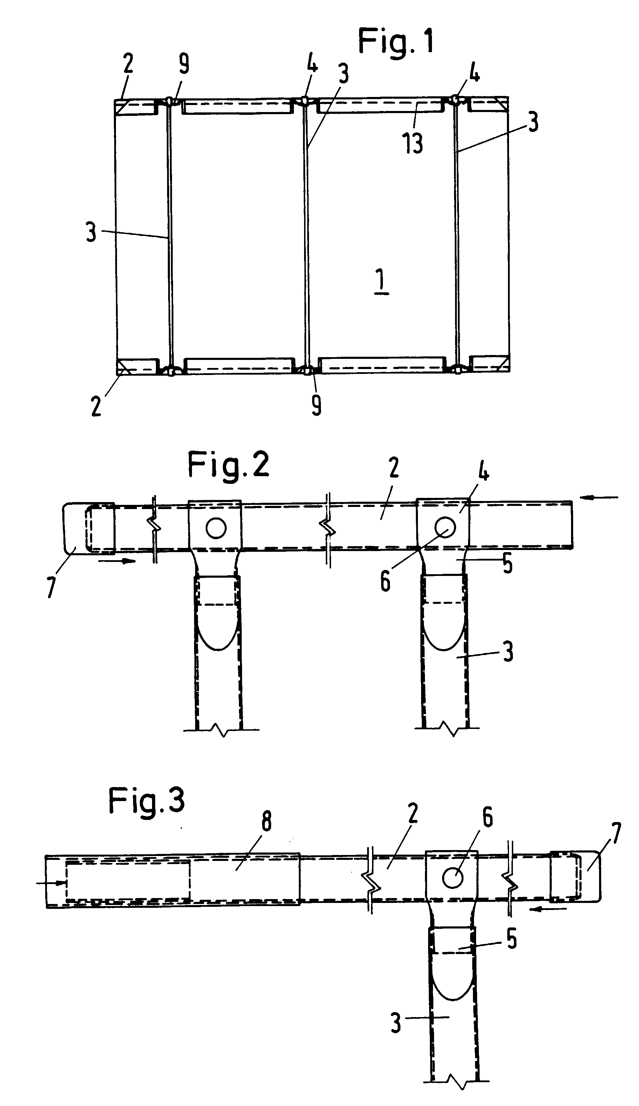

An den Längsstreben 2 sind Klammern 4 mit Aufsteckzapfen 5 durch Nieten 6 befestigt. Die Aufsteckzapfen 5 passen stramm in die Rohre, die die Querbügel 3 bilden. Zum Schutz sind auf die Enden der Längsstreben 2 Kappen 7 aufgesteckt. Die Längsstreben 2 sind geteilt, um in Transportstellung entsprechend kürzere Teile zu erhalten. In der Teilung sind sie durch Aufsteckmuffen 8 verbunden (siehe Fig. 3).

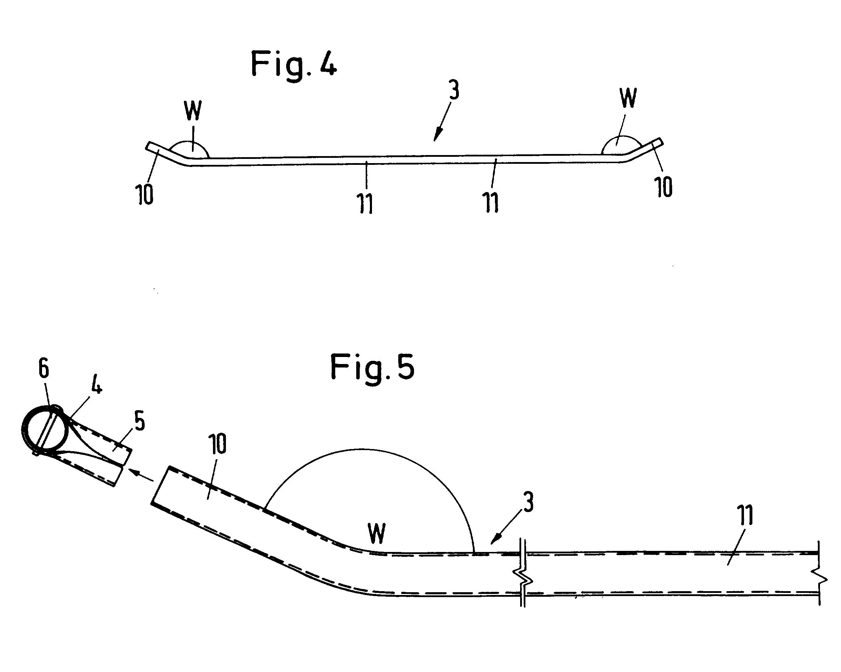

Ein Querbügel 3, von dem bei der Ausführungsform, wie sie in Fig. 1 dargestellt ist, drei Verwendung finden, ist in Seitenansicht in Fig. 4 dargestellt. Die durch ein Verbindungsstück 11 verbundenen Enden 10 des Querbügels 3 sind abgebogen, wie beim Betrachten der Fig. 4 deutlich wird und zwar in Richtung der durch das Reflektionstuch definierten Ebene. Diese Ebene steht in Fig. 4 senkrecht zur Zeichenebene und liegt oberhalb des dort dargestellten Querbügels. Der Winkel W, in dem die Enden 10 abgebogen sind, ist größer als 90° und liegt bei dieser Ausführungsform bei ca. 155°. Durch das Aufstecken der Querbügel auf die mit Hilfe der Klammern 4 und Nieten 6 an den Längsstreben 2 befestigten Aufsteckzapfen 5 entsteht ein stabiles, räumliches Gebilde, das durch die Federspannung des Reflektionstuches 1 zusammengehalten wird. Zum Aufstecken, d.h. zum Zusammensetzen, wird das Reflektionstuch stark gespannt, so daß die Enden 10 auf die entsprechenden Aufsteckzapfen 5 aufgesteckt werden können. Nach dem Einnenmen der endgültigen Stellung bleibt die Federspannung noch erhalten.

Beim Betrachten der Fig. 1 wird deutlich, daß an den Längsseiten des Reflektionstuches 1 Längstaschen 13 ausgebildet sind, in die die Längsstreben 2 einsteckbar sind. Im Bereich der Klammern 4 sind Ausschnitte vorgesehen, so daß die Längstaschen 13 hier die Montage und die Anordnung der Querbügel 3 nicht behindern.

Durch den Winkel W, der größer als 90° ist, entsteht im Zusammenwirken mit der Federspannung des Reflektionstuches 1 ein stabiles und torsionsfestes Gebilde, das sehr leicht ist und sich leicht zusammensetzen und auseinandernehmen läßt. Bei einer Ausführungsform mit 2,5 m² Reflektionsfläche beträgt das Gesamtgewicht ca. 2000 g. Im zusammengelegten Zustand paßt der gesamte Reflektor in ein Rohr von ca. 10 cm Durchmesser und 110 cm Länge. Es sind keine Befestigungsteile wie lose Schrauben oder dergleichen vorhanden, die verlorengehen können. Die gesamte Montage erfolgt durch Zusammenstecken. Gehalten werden die Steckverbindungen durch die Eigenspannung des Reflektionstuches.

Selbstverständlich läßt sich der Lichtreflektor auch mit Hilfe eines entsprechenden Adapters an einem Stativ befestigen.

## Patentansprüche

1. Transportabler Lichtreflektor, der aus einem Reflektionstuch (1) besteht, das an einem zusammenlegbaren Rahmengestell befestigt ist, das durch zwei Längsstreben (2) und mindestens zwei diese verbindenden Querbügel (3) gebildet ist, die (Querbügel) an ihren Enden (10) in Richtung auf die durch die Längsstreben und dem an diesen befestigten Reflektionstuch (1) definierten Ebene abgebogen sind, wobei jeder Winkel zwischen dem entsprechend abgebogenen Ende (10) und dem Verbindungsstück (11) zwischen den Enden größer als 90° ist, und das Reflektionstuch (1) aus federelastischem Material besteht, das in Gebrauchsstellung gespannt ist, dadurch gekennzeichnet, daß das durch die Längsstreben und Querbügel gebildete räumliche Rahmengestell durch die Federspannung zusammengehalten wird.

2. Lichtreflektor nach Anspruch 1, dadurch gekennzeichnet, daß an den Längsstreben (2) Aufsteckzapfen (5) für die Enden (10) der Querbügel (3) vorgesehen sind, wobei die Achsrichtung der Aufsteckzapfen und der Enden der Querbügel in Gebrauchslage gleich und durch den Winkel (W) festgelegt sind.

3. Lichtreflektor nach Anspruch 1 oder 2, dadurch gekennzeichnet, daß die Querbügel (3) Rohre sind, die auf die Aufsteckzapfen (5) stramm aufsteckbar sind.

4. Lichtreflektor nach Anspruch 2 oder 3, dadurch gekennzeichnet, daß die Aufsteckzapfen (5) durch Klammern (4) an den Längsstreben (2) befestigt sind.

5. Lichtreflektor nach einem oder mehreren der vorstehenden Ansprüche, dadurch gekennzeichnet, daß das Reflektionstuch (1) Längstaschen (13) zur Aufnahme der Längsstreben (2) aufweist, die im Bereich der Aufsteckzapfen (5) bzw. der Klammern (4) ausgeschnitten sind.

6. Lichtreflektor nach einem oder mehreren der vorstehenden Ansprüche, dadurch gekennzeichnet, daß die Längsstreben (2) geteilt und in der Teilung durch eine Steckmuffe (8) verbindbar sind.

7. Lichtreflektor nach einem oder mehreren der vorstehenden Ansprüche, dadurch gekennzeichnet, daß der Winkel (W) zwischen jedem Ende (10) und dem Verbindungsstück (11) des Querbügels (3) im Bereich zwischen 120 und 170°, vorzugsweise bei 155°, liegt.

## Claims

1. Portable light reflector comprising a reflecting sheet (1) fastened to a collapsible frame, which comprises two longitudinal struts (2) and at least two transverse stirrups (3) for connecting the longitudinal struts, the transverse stirrups are deflected on its end portions (10) in direction to the plane defined by the longitudinal struts and the reflector sheet (1) mounted thereto, wherein the angle between the deflected end portions and the connecting portion (11) between the end portions being greater than 90°, and the reflecting sheet (1) is of a spring-elastic material which is tensioned when in a position of use, characterized in that the three dimensional frame formed by the longitudinal struts and the transverse stirrups is hold together by the springelasticity.

2. Light reflector according to claim 1, characterized in that pins (5) on the longitudinal strus (2) are provided for the end portions (10) of the transverse stirrups (3), wherein the pins and the end portions of the transverse stirrups are aligned in axial direction thereof in the position of use and the axial direction is determined by the angle (W).

3. Light reflector according to claim 2, characterized in that the transverse stirrups (3) are tubes, which are tightly slidably onto the pins (5).

4. Light reflector according to claim 2 or 3, characterized in that the pins (5) are fastened by clamps (4) to the longitudinal strus (2).

5. Light reflector according to one ore more of the proceeding claims, characterized in that the reflecting sheet (1) has longitudinal pockets (13) for receiving the longitudinal struts (2), which in the area of the pins (5) or the clamps (4), respectively are cut out.

6. Light reflector according to one or more of the proceeding claims, characterized in that the longitudinal stirrups (2) are devided, and the area of division connecticable by a plug-in sleeve (8).

7. Light reflector according to one or more of the proceeding claims, characterized in that the angle (W) between each end portion (10) and the connecting portion (11) of the transverse stirrup (3) is in the range of 120° to 170°, preferably 155°.

## Revendications

1. Réflecteur transportable qui est formé d'une toile de réflexion (1) qui est fixée sur un châssis pliant formé de deux longerons (2) et d'au moins deux traverses (3) qui relient lesdits longerons et sont recourbées à leurs extrémités (10) en direction du plan défini par les longerons et la toile de réflexion (1) fixée sur ceux-ci, chaque angle entre l'extrémité (10) recourbée et la pièce de raccordement (11) entre les extrémités étant supérieur à 90° et la toile de réflexion (1) étant en un matériau élastique qui est tendu dans la position d'utilisation caractérisé en ce que le châssis tridimensionnel formé par les longerons et les traverses est maintenu par la tension élastique.

2. Réflecteur selon la revendication 1, caractérisé en ce que des embouts d'emboîtement (5) pour les extrémités (10) des traverses (3) sont prévus sur les longerons (2), la direction axiale des embouts d'emboîtement et celle des extrémités des traverses étant identiques dans la position d'utilisation et étant fixées par l'angle (W).

3. Réflecteur selon la revendication 1 ou 2, caractérisé en ce que les traverses (3) sont des tubes qui peuvent être emboîtés avec raideur sur les embouts d'emboîtement (5).

4. Réflecteur selon la revendication 2 ou 3, caractérisé en ce que les embouts d'emboîtement (5) sont fixés par des brides de fixation (4) sur les longerons (2).

5. Réflecteur selon l'une ou plusieurs des revendications précédentes, caractérisé en ce que la toile de réflexion (1) comporte des poches longitudinales (13) qui sont destinées à recevoir les longerons (2) et qui sont découpées dans la zone des embouts d'emboîtement (5) ou des brides de fixation (4).

6. Réflecteur selon l'une ou plusieurs des revendications précédentes, caractérisé en ce que les longerons (2) sont divisés et peuvent être reliés au niveau de la division par un manchon emboîté (8).

7. Réflecteur selon l'une ou plusieurs des revendications précédentes, caractérisé en ce que l'angle (W) entre chaque extrémité (10) et la pièce de raccordement (11) de la traverse (3) est compris entre 120 et 170°, et est de préférence d'environ 155°.
